# EUROPÄISCHE PATENTSCHRIFT

(11) **EP 1 153 648 B1**
(45) Veröffentlichungstag und Bekanntmachung des Hinweises auf die Patenterteilung: **04.01.2006**
(21) Anmeldenummer: 01109984.3
(22) Anmeldetag: 25.04.2001
(51) Int. Cl.: B01D 53/94

(54) **Strukturierter Katalysator für die selektive Reduktion von Stickoxiden mittels Ammoniak unter Verwendung einer zu Ammoniak hydrolysierbaren Verbindung**
Structured catalyst for the selective reduction of nitrogen oxides by ammonia using a hydrolisable compound
Catalyseur structuré pour la réduction sélective d'oxydes d'azote par l'ammoniac utilisant un composé hydrolisable

(30) Priorität: 10.05.2000 DE 10022842
(43) Veröffentlichungstag der Anmeldung: 14.11.2001
(73) Patentinhaber: Umicore AG & Co. KG, 63457 Hanau (DE)
(72) Erfinder: Harris, Michael, 64839 Münster (DE); Leyrer, Jürgen, Dr., 79618 Rheinfelden (DE); Demel, Yvonne, 60386 Frankfurt (DE); Lox, Egbert, Dr., 63403 Hanau (DE); Kreuzer, Thomas, Dr., 61184 Karben (DE)
(74) Vertreter: Stellbrink, Axel

(56) Entgegenhaltungen:
- EP-A- 0 716 876
- DE-A- 19 731 865
- DE-A- 19 738 737
- DE-A- 19 742 705

## Beschreibung

Die vorliegende Erfindung betrifft einen strukturierten Katalysator für die selektive Reduktion von im mageren Abgasstrom eines Verbrennungsmotors enthaltenen Stickoxiden mittels Ammoniak unter Verwendung einer zu Ammoniak hydrolysierbaren Verbindung. Der Katalysator wird bevorzugt zur Reinigung der Abgase von mit Dieselmotoren betriebenen Kraftfahrzeugen eingesetzt.

Abgase aus Verbrennungsmotoren, insbesondere aus Diesel- und Magermotoren (mit mageren Kraftstoffgemischen betriebene Ottomotoren), enthalten neben den Schadstoffen Kohlenmonoxid CO, Kohlenwasserstoffen HC und Partikeln auch Stickoxide NOx. Bei Ottomotoren, welche mit einem stöchiometrisch zusammengesetztem Luft/Kraftstoff-Gemisch betrieben werden, ist eine drastische Verminderung des Schadstoffausstoßes durch die Verwendung von Dreiweg-Katalysatoren möglich. Sie sind in der Lage, die im Abgas vorliegenden Stickoxide unter gleichzeitiger Oxidation von Kohlenwasserstoffen und Kohlenmonoxid zu Stickstoff zu reduzieren. Ein stöchiometrisch zusammengesetztes Abgas enthält etwa 0,7 Vol.-% Sauerstoff. Diesel- und Magermotoren weisen dagegen bis zu 15 Vol.-% Sauerstoff im Abgas auf. Durch diesen hohen Sauerstoffüberschuss können die Stickoxide nicht mit konventionellen Dreiweg-Katalysatoren reduziert werden.

Zur Umsetzung der Stickoxide in Abgasen mit Sauerstoffüberschuss ist es bekannt, die Stickoxide selektiv an einem geeigneten Katalysator unter Zugabe von Ammoniak zu reduzieren. Dieses sogenannte SCR-Verfahren (Selective Catalytic Reduction) wird zum Beispiel in den europäischen Patentschriften EP 0 376 025 B1 und EP 0 385 164 B1 beschrieben. Zur Vermeidung der Mitführung von Ammoniak im Fahrzeug kann dieser durch eine zu Ammoniak hydrolysierbare Verbindung, gewöhnlich Harnstoff, ersetzt werden, aus der durch Hydrolyse leicht Ammoniak gewonnen werden kann. Dieses Verfahren erfordert jedoch zwei Katalysatoren, einen Hydrolysekatalysator und einen Reduktionskatalysator.

So beschreibt die DE 40 38 054 A1 ein Verfahren zum Betreiben eines SCR-Katalysators zur Verminderung von Stickoxiden, welches darin besteht, eine Harnstofflösung auf einen geheizten Verdampfer zu versprühen und mittels eines Hydrolysekatalysators zu Ammoniak und Kohlendioxid umzusetzen. Der so gewonnene Ammoniak wird am nachgeschalteten SCR-Katalysator zur Reduktion der im Abgas enthaltenen Stickoxide verwendet. Als Hydrolysekatalysator dienen Oxide mit Feststoffsäureeigenschaften, die Titandioxid, Aluminiumoxid, Siliciumdioxid oder deren Mischphasen und Verbindungen untereinander als Matrixoxid enthalten, wobei die Säureeigenschaften durch Zusatz von Oxiden fünf- und sechswertiger Elemente, wie SO₃ und WO₃, als Stabilisatoren und zur Verstärkung der Aktivität herangezogen werden.

Die DE 42 03 807 A1 schlägt zur katalytischen Reduktion von Stickoxiden aus sauerstoffhaltigen Abgasen unter Anwendung von Harnstoff eine Vorrichtung vor, die einen Hydrolysekatalysator enthält, der aus feinen Strömungskanälen besteht, die durch Umlenkungen und Durchbrüche bzw. Schlitze Teilströmungen zulassen, die annähernd senkrecht zur Hauptströmung gerichtet sind. Damit soll einen gleichmäßige Verteilung der Harnstofflösung sowie eine sehr rasche Aufheizung der Lösung bewirkt werden. Die Harnstofflösung kann auf diese Weise ohne Bildung von schädlichen Nebenprodukten quantitativ in Ammoniak und Kohlendioxid umgewandelt werden.

Als geeignete Aktivkomponenten für den Hydrolysekatalysator werden in der DE 42 03 807 A1 Mischungen von Aluminiumoxid mit Titanoxid, Siliciumdioxid, Zirkondioxid und/oder H-Zeolithen im Gewichtsverhältnis zwischen Aluminiumoxid und den anderen Oxiden von 90:10 bis 10:90 genannt.

Die EP 0 615 777 A1 beschreibt ebenfalls ein Katalysatoranordnung aus Harnstoff-Hydrolyse- und SCR-Katalysator. Zur Gewinnung von Ammoniak wird fester Harnstoff anstatt einer wässrigen Harnstofflösung benutzt. Hinter dem SCR-Katalysator ist noch ein Oxidationskatalysator angeordnet, der einen möglichen Schlupf von Ammoniak durch Oxidation des Ammoniaks zu Wasser und Stickstoff verhindert.

Die DE 44 17 238 A1 beschreibt eine weitere Einrichtung zur Minderung der Stickoxide im Abgas eines mit Luftüberschuss betriebenen Verbrennungsmotors aus einem Hydrolysekatalysator, einem SCR-Katalysator und einem nachgeschalteten Oxidationskatalysator.

Die aus der EP 0 385 164 B1 bekannten SCR-Katalysatoren weisen eine ähnliche Zusammensetzung wie Hydrolysekatalysatoren auf. Sie enthalten jedoch zusätzliche Komponenten, die für die selektive katalytische Reduktion förderlich sind. Gemäß der genannten Patentschrift enthalten die Reduktionskatalysatoren Titanoxid und mindestens ein Oxid von Wolfram Silicium, Bor, Aluminium, Phosphor, Zirkon, Barium, Yttrium, Lanthan und Cer und als zusätzliche Komponenten mindestens ein Oxid von Vanadium, Niob, Molybdän, Eisen und Kupfer. Besonders diese zusätzlichen Komponenten verleihen dem Katalysator gute Reduktionseigenschaften in sauerstoffhaltigen Abgasen.

Charakteristisch für diese SCR-Katalysatoren ist ihr sogenanntes Aktivitätsfenster. Bei gegebenem Volumen des Katalysators, das heißt bei Belastung des Katalysators mit einer bestimmten Raumgeschwindigkeit, läuft die Umsetzung der Stickoxide nur in einem begrenzten Temperaturintervall optimal ab. Für die genannten Katalysatorzusammensetzungen und Raumgeschwindigkeiten von 50000 bis 100000 h⁻¹ liegt dieses Fenster etwa zwischen 200 und 600° C und stimmt damit ungefähr mit den Abgastemperaturen von Dieselfahrzeugen überein. Soll dieses Aktivitätsfenster zu niedrigeren Temperaturen verschoben werden, so müssen die Katalysatoren zusätzlich mit Edelmetallen der Platingruppe des periodischen Systems der Elemente ausgerüstet oder im Volumen deutlich angehoben werden, was jedoch aus Platzgründen nur begrenzt möglich ist.

Nachteilig bei den bekannten Katalysatorsystemen zur Umsetzung der Stickoxide im Abgas von Dieselfahrzeugen ist ihre große Baulänge auf Grund der zwei hintereinander geschalteten Katalysatoren. Außerdem ergeben sich beim Kaltstart Probleme wegen der großen thermischen Masse der Katalysatorträger, wodurch das gesamte System nur sehr langsam seine Betriebstemperatur erreicht. Durch die Zudosierung der Harnstofflösung wird das Abgas zusätzlich gekühlt. Die zwangsläufige Temperaturdifferenz zwischen Hydrolysekatalysator und Reduktionskatalysator wirkt sich außerdem negativ auf das dynamische Umsetzungsverhalten des Katalysatorsystems aus.

Aufgabe der vorliegenden Erfindung ist, es ein Katalysatorsystem anzugeben, welches eine geringere Baulänge als herkömmliche Systeme ermöglicht und darüber hinaus noch wesentlich günstigere thermische Eigenschaften aufweist.

Diese Aufgabe wird gelöst durch einen strukturierten Katalysator für die selektive Reduktion von im mageren Abgasstrom eines Verbrennungsmotors enthaltenen Stickoxiden mittels Ammoniak unter Verwendung einer zu Ammoniak hydrolysierbaren Verbindung, welche in Form eines Aerosols in den Abgasstrom eingedüst wird, wobei der strukturierte Katalysator in Form eines monolithischen Katalysatorkörpers vorliegt, der von einer Eintrittsstirnfläche zu einer Austrittsstirnfläche von einer Vielzahl von Strömungspfaden für das Abgas durchzogen ist. Der Katalysator enthält einen Reduktionskatalysator für die selektive Reduktion von Stickoxiden mittels Ammoniak und einen Hydrolysekatalysator für die Hydrolyse der zu Ammoniak hydrolysierbaren Verbindung Der Katalysator is dadurch gekennzeichnet, dass der Hydrolysekatalysator in Form einer Beschichtung auf dem Reduktionskatalysator aufgebracht ist.

DE-A-19738737 beschreibet einen Katalysator für die selektive Reduktion von Stickoxiden der einen Reduktionskatalysator und einem Hydrolysekatalysator enthält.

Durch die erfindungsgemäße Anordnung von Hydrolysekatalysator und SCR-Reduktionskatalysator im unmittelbaren Kontakt zueinander kann auf einen separaten Hydrolysekatalysator verzichtet werden. Dadurch ergibt sich für das gesamte Katalysatorsystem eine wesentlich verkürzte Baulänge. Die Vorteile der Erfindung beschränken sich jedoch nicht nur auf diesen geometrischen Gesichtspunkt. Vielmehr ergeben sich durch den engen Kontakt zwischen Hydrolysekatalysator und Reduktionskatalysator synergetische Effekte, die zu einer deutlich besseren katalytischen Leistung gegenüber getrennten Katalysatoren führen.

Im erfindungsgemäßen Katalysator bildet der Reduktionskatalysator den Katalysatorträger für den Hydrolysekatalysator. Dadurch entfällt der separate Tragkörper für den Hydrolysekatalysator mit seiner großen thermischen Masse. Der erfindungsgemäße Katalysator erreicht also nach dem Kaltstart sehr viel eher seine Arbeitstemperatur und damit seine volle katalytische Leistung als ein getrenntes Katalysatorsystem.

Zum Betreiben des Katalysators in einem Abgasreinigungssystem muß ihm die zu Ammoniak hydrolysierbare Verbindung, gewöhnlich Harnstoff, in ausreichender Menge zur Reduktion der Stickoxide zugeleitet werden. Eine ausreichende Menge Harnstoff liegt vor, wenn der daraus durch Hydrolyse gebildete Ammoniak ein Molverhältnis zu den im Abgas enthaltenen Stickoxiden von etwa 0,8:1 bis 1,2:1 aufweist (siehe EP 0 385 164 B1). Der Harnstoff kann in Form einer wässrigen Harnstofflösung, als Feststoff oder in geschmolzener Form vor dem Katalysator in das Abgas eingedüst werden. Verfahren zum Eindosieren des Harnstoffs in den Abgasstrom und die Regelung der Harnstoffmenge sind aus dem Stand der Technik bekannt und nicht Gegenstand der vorliegenden Erfindung.

Durch die bekannten Techniken der Harnstoffzugabe zum Abgasstrom des Fahrzeugs trifft der Harnstoff in Form eines Aerosols auf den Katalysator. Er wird von der Hydrolyseschicht aufgesogen und hydrolysiert. Der dabei entstehende Ammoniak bildet sich in direkter Nachbarschaft zum Reduktionskatalysator mit lokal sehr hohem Partialdruck und wird von diesem zum Teil für die Reduktion der Stickoxide an Ort und Stelle verbraucht. Der unverbrauchte Teil geht in die Gasphase des Abgasstromes über und versorgt die stromabwärts liegenden Teile des Katalysators mit Reduktionsmittel. Insgesamt ermöglicht der erfindungsgemäße Katalysator eine wesentlich bessere Nutzung des Ammoniaks. Dadurch, dass ein großer Teil des Ammoniaks gar nicht erst in die Gasphase des Abgasstromes übertreten muß, um seine Reduktionswirkung zu entfalten, verringert sich auch der mögliche Ammoniak-Schlupf und entlastet so den gegebenenfalls hinter dem Katalysator angeordneten Oxidationskatalysator.

In vielen Anwendungsfällen kann allein schon durch Beschichten nur der Stirnfläche des Körpers des Reduktionskatalysators mit dem Hydrolysekatalysator der gewünschte Effekt erreicht werden, so dass das Volumen des Reduktionskatalysators durch den Hydrolysekatalysator nur geringfügig vermindert wird.

Die insgesamt bessere Ausnutzung des Harnstoffs mit dem erfindungsgemäßen Katalysator vermindert auch das mit konventionellen SCR-Verfahren verknüpfte Problem der möglichen Bildung von Lachgas (N₂O) durch unselektive Oxidation von Ammoniak am Reduktionskatalysator selber oder durch den nachgeschalteten Oxidationskatalysator, insbesondere bei hohen Abgastemperaturen.

Ein weiterer Vorteil des strukturierten Katalysators ist auch die Tatsache, dass Hydrolyse und Reduktion etwa bei gleicher Temperatur stattfinden, da zwischen Hydrolysekatalysator und dem darunter liegenden Reduktionskatalysator nur eine minimale Temperaturdifferenz vorliegt. Hierdurch liefert der Katalysator auch dann noch gute Reduktionsergebnisse, wenn bei getrennten Katalysatorsystemen infolge des gewählten Betriebspunktes des Motors die Temperatur am Reduktionskatalysator wegen des Temperaturabfalls zwischen Hydrolysekatalysator und Reduktionskatalysator schon unterhalb des Aktivitätsfensters des Reduktionskatalysators liegen würde.

Weiterhin wirkt der Hydrolysekatalysator auch als Schutzschicht für den darunterliegenden Reduktionskatalysator, dessen Reduktionsaktivität durch Rußablagerungen und andere Verunreinigungen aus dem Abgas empfindlich gestört werden kann, während solche Verunreinigungen erfahrungsgemäß kaum einen Einfluß auf die Aktivität des Hydrolysekatalysators haben.

In einer besonderen Ausführungsform der Erfindung kann der Reduktionskatalysator als sogenannter Vollkatalysator ausgeführt sein, das heißt er besteht durchgehend aus katalytisch aktiver Masse und ist zum Beispiel durch Tablettieren oder Extrudieren der katalytisch aktiven Masse oder einer Vorstufe davon erhältlich. Bevorzugt wird der Reduktionskatalysator in Form eines Wabenkörpers mit parallelen Kanälen extrudiert, die die Strömungspfade für das Abgas bilden und regelmäßig über den Querschnitt des Katalysatorkörpers angeordnet sind. Die Strömungskanäle werden durch Kanalwände begrenzt. Auf die Kanalwände der Strömungskanäle ist der Hydrolysekatalysator in Form einer Beschichtung aufgebracht.

Zur Beschichtung des Katalysatorkörpers werden die Komponenten des Hydrolysekatalysators zu einer Beschichtungsdispersion verarbeitet, mit welcher die Strömungskanäle mit Hilfe bekannter Techniken beschichtet werden kann. Die Zelldichte (Anzahl der Strömungskanäle pro Quadratzentimeter) dieser Vollkatalysatoren liegt etwa zwischen 20 und 100 cm⁻².

Da beim Durchströmen des Wabenkörpers sich der Harnstoff überwiegend schon im vorderen Teil des Wabenkörpers auf den Kanalwänden ablagert, ist es vorteilhaft, den Hydrolysekatalysator zur optimalen Ausnutzung nur im vorderen Teil des Reduktionskatalysators aufzubringen. Ausreichend ist es, wenn der Hydrolysekatalysator ausgehend von der Eintrittsstirnfläche nur auf 10 bis 70% der Länge des Wabenkörpers auf den Reduktionskatalysator aufgebracht wird.

In einer bevorzugten Ausführungsform der Erfindung werden Reduktionskatalysator und Hydrolysekatalysator in Form übereinanderliegender Beschichtungen auf einem inerten Tragkörper aufgebracht, wobei die Hydrolyseschicht auf der Reduktionsschicht liegt und direkt mit dem Abgas in Kontakt tritt. Als inerte Tragkörper eignen sich alle bekannten Formen von Katalysatorträgern, das heißt Wabenkörper aus Metall oder Keramik mit Zelldichten von 20 bis 200 cm⁻². Vorteilhaft sind auch Mischstrukturen als Katalysatorträger wie zum Beispiel Sulzer-Mischer, die gleichzeitig für eine optimale Verteilung des Harnstoff-Aerosols, beziehungsweise des freigesetzten Ammoniaks, über den Katalysatorquerschnitt sorgen.

Werden Wabenkörper als Tragkörper verwendet, so können die schon oben besprochenen Maßnahmen zur Anpassung der Aktivkomponenten an die sich längs des Wabenkörpers ändernden Konzentrationen von Harnstoff-Aerosol, Ammoniak und Stickoxiden sinngemäß angewendet werden.

Als SCR-Katalysatoren eignen sich die in der EP 0 385 164 B1 genannten Zusammensetzungen auf der Basis von Titandioxid. Insbesondere kann der Reduktionskatalysator folgende Komponenten enthalten:
A) Titandioxid,
B) mindestens ein Oxid von Wolfram, Niob, Molybdän, Silicium, Bor, Aluminium, Phosphor, Zirkon, Barium, Yttrium, Lanthan und Cer und Mischoxide hiervon und mit Titandioxid und
C) mindestens ein Oxid von Vanadium, Eisen und Kupfer.

Bevorzugt liegt das Titandioxid zu 30 bis 100 Gew.-% in der Anatasmodifikation mit einer spezifischen Oberfläche von mehr als 40 m²/g vor. Zur Stabilisierung gegenüber hohen Temperaturbelastungen kann es mit 1 bis 20 Gew.-% Wolframoxid, Molybdänoxid, Siliciumdioxid oder Lanthanoxid stabilisiert sein.

Alternativ zu der beschriebenen Zusammensetzung des Reduktionskatalysators kann er auch einen oder mehrere Zeolithe enthalten, welche mit Kupfer und/oder Eisen sowie gegebenenfalls noch mit Cer oder Molybdän beladen oder ausgetauscht sind. Auch eine Mischung der Titandioxid enthaltenden Zusammensetzung mit der Zeolithe enthaltenden Zusammensetzung ist möglich.

Für die im erfindungsgemäßen Katalysator verwendeten Hydrolyse- und Reduktionskatalysatoren eignen sich die aus dem Stand der Technik bekannten Zusammensetzungen. Insbesondere werden als Hydrolysekatalysator Titandioxid, Aluminiumoxid, Siliciumdioxid, Zirkondioxid oder deren Mischphasen und Verbindungen untereinander eingesetzt. Oxide fünf- und sechswertiger Elemente, wie SO₃, WO₃, Nb₂O₅ und MoO₃ können als Stabilisatoren und zur Verstärkung der Aktivität herangezogen werden.

Mit der Reduktionsaktivität des SCR-Katalysators ist auch immer ein Potential zur Bildung von Lachgas durch Oxidation des Ammoniaks verbunden. Diese Bildung wird im wesentlichen durch die zusätzlichen Komponenten des Reduktionskatalysators, insbesondere durch Vanadiumpentoxid katalysiert. Die Bildung von Lachgas nimmt mit steigender Abgastemperatur zu und ist um so stärker je höher der Partialdruck des Ammoniaks ist. Zur Verminderung der Bildung von Lachgas ist daher in einer besonderen Ausführungsform des Katalysators vorgesehen, die Aktivkomponente Vanadiumpentoxid längs des Reduktionskatalysators mit steigender Konzentration aufzubringen. Im einfachsten Fall ist eine stufenförmige Konzentrationsverteilung ausreichend, die zum Beispiel durch entsprechendes Imprägnieren des Reduktionskatalysators mit Vorstufen von Vanadiumpentoxid erzeugt werden kann. Demgemäß wird also im anströmseitigen Teil des Katalysators eine geringe Konzentration von Vanadiumpentoxid vorgesehen, da hier der Partialdruck von Ammoniak und auch die Abgastemperatur noch hoch ist. Mit zunehmender Entfernung von der Eintrittsstirnfläche nimmt der Partialdruck des Ammoniaks durch die Umsetzung mit den Stickoxiden ab. Hier kann daher die Konzentration von Vanadiumpentoxid erhöht werden, um auch noch bei den schon verminderten Partialdrücken von Ammoniak und Stickoxiden gute Umsatzraten zu erzielen.

Die erhöhte Konzentration von Vanadiumpentoxid wird bevorzugt auf einer Länge von 10 bis 90% des Wabenkörpers ausgehend von der Austrittsstirnfläche aufgebracht.

Vorteilhafterweise werden die beiden genannten Maßnahmen miteinander kombiniert, das heißt der Hydrolysekatalysator wird nur im vorderen Bereich aufgebracht, während im komplementären, hinteren Bereich des Reduktionskatalysators die Konzentration an Vanadiumpentoxid erhöht wird.

Zur weiteren Erläuterung der Erfindung dienen die Figuren 1 bis 3 und die Beispiele. Es zeigen:
- **Figur 1:**: Aufbau des strukturierten Katalysators aus zwei übereinanderliegenden Schichten
- **Figur 2:**: Aufbau des strukturierten Katalysators aus zwei übereinanderliegenden Schichten, wobei die oberste Schicht nur in einem Teilbereich aufgebracht ist
- **Figur 3:**: Aufbau des strukturierten Katalysators aus insgesamt drei unterschiedlichen, katalytisch aktiven Zonen

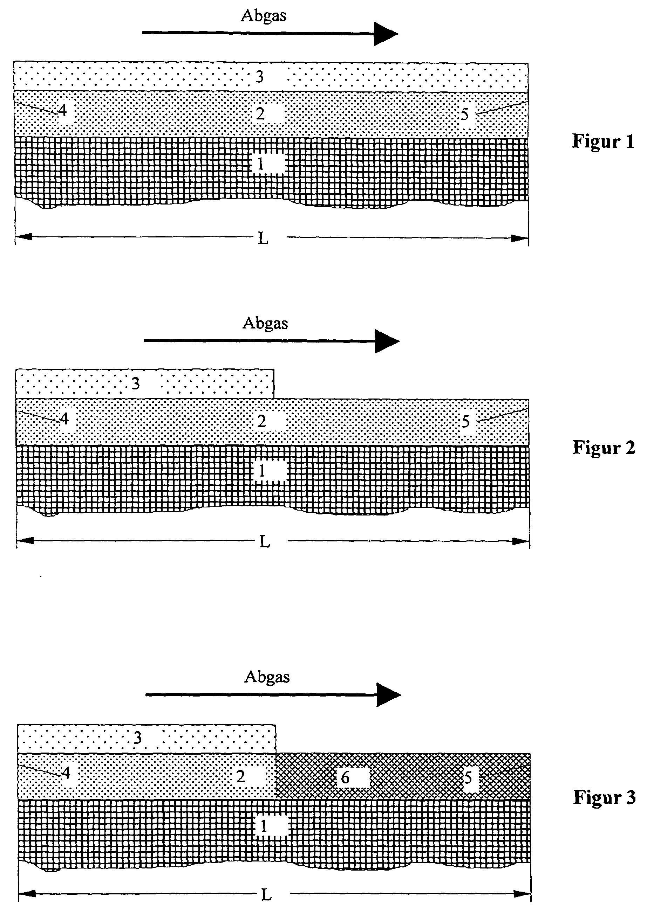

Die Figuren 1 bis 3 zeigen einige Ausführungsformen der Erfmdung für den Fall, dass Hydrolysekatalysator und Reduktionskatalysator in Form übereinanderliegender Beschichtungen auf den Kanalwänden der Strömungskanäle eines Wabenkörpers aufgebracht sind. In den Figuren bezeichnet (1) jeweils eine Kanalwand des inerten Wabenkörpers. (2) ist die Reduktions- und (3) die Hydrolyseschicht, welche direkt mit dem Abgas in Kontakt steht. (4) bezeichnet die Eintrittsstirnfläche des Wabenkörpers und (5) seine Austrittsstirnfläche. In Figur 1 sind beide Beschichtungen gleichmäßig über die gesamte Länge L des Wabenkörpers aufgebracht. Figur 2 zeigt dagegen eine Ausführungsform, bei der die Hydrolyseschicht (3) von der Eintrittsstirnfläche ausgehend nur auf 50% der Länge des Wabenkörpers aufgebracht ist. Figur 3 zeigt dieselbe Anordnung wie Figur 2, die hintere Hälfte der Reduktionsschicht wurde jedoch zusätzlich mit zum Beispiel Vanadiumpentoxid (6) belegt.

Die zur Erfüllung der katalytischen Aufgabe notwendigen Beschichtungskonzentrationen liegen für den Reduktionskatalysator zwischen etwa 50 und 250 Gramm Katalysator pro Liter des Katalysatorkörpers [g/l]. Der Hydrolysekatalysator wird in Konzentrationen von 10 bis 160, bevorzugt 40 bis 120 g/l, angewendet. Unterhalb von 10 g/l ist die Hydrolyseaktivität zu gering, während oberhalb von 160 g/l die unter der Hydrolyseschicht liegende Reduktionsschicht ihre Aktivität nicht mehr voll entfalten kann.

Zur Herstellung der Beschichtungen wird aus den pulverförmigen Feststoffen eine wäßrigen Beschichtungsdispersion angefertigt. Der inerte Tragkörper kann zum Beispiel durch Tauchen in diese Beschichtungsdispersion mit einer Schicht aus den entsprechenden Stoffen versehen werden. Nach dem Aufbringen der Beschichtungsdispersion wird die Beschichtung getrocknet und gewöhnlich bei Temperaturen zwischen 200 und 600° C für die Dauer von 1 bis 5 Stunden calciniert. Danach können weitere Aktivkomponenten durch Imprägnieren mit Lösungen geeigneter Vorläuferverbindungen in die Beschichtung eingebracht werden. Die hier zur Anwendung kommenden Techniken sind dem Fachmann wohlbekannt. Nach dem Aufbringen der ersten Reduktionsschicht wird die Hydrolyseschicht in gleicher Weise aufgebracht.

Die Hydrolyseschicht kann auch durch ein- oder mehrfaches Aufsprühen auf die Stimfläche der Eintrittsstirnfläche aufgebracht werden. In diesem Fall nimmt die Beschichtungskonzentration des Hydrolysekatalysators von der Eintrittsstirnfläche längs des Katalysatorkörpers kontinuierlich bis auf Null ab.

Durch Variation der Beschichtungsmenge bzw. durch gezieltes Besprühen ausgewählter Bereiche der Stirnseite, welche im Betrieb einer hohen Aerosol- bzw. Abgasbelastung ausgesetzt sind, kann die Beschichtungskonzentration der Hydrolysebeschichtung an die Verteilung des Aerosols der zu Ammoniak hydrolysierbaren Verbindung über den Querschnitt des Abgasstromes angepasst werden. Je nach Anwendungsfall kann es dabei genügen, nur etwa 10 bis 90% der Eintrittsstirnfläche mit dem Hydrolysekatalysator zu beschichten.

Als pulverförmige Feststoffe werden bevorzugt hochoberflächige Materialien wie aktive Aluminiumoxide und Titandioxid in der Anatasform mit spezifischen Oberflächen (gemessen nach DIN 66132) zwischen 40 und 300 m²/g verwendet. Aluminiumoxid und Titanoxid können durch geeignete Zusätze wie zum Beispiel Lanthanoxid, Bariumoxid, Wolframoxid, Siliciumoxid, Molybdänoxid und Nioboxid thermisch stabilisiert sein. Geeignete Materialien sind kommerziell erhältlich.

Beim Aufbringen der Hydrolyseschicht muß darauf geachtet werden, dass diese Schicht eine ausreichende Diffusion der Stickoxide zur Reduktionsschicht ermöglicht. Gegebenenfalls kann die Porosität dieser Deckschicht durch Zusätze von besonders grobteiligen Feststoffen oder anderen Porenbildnern erhöht werden.

Die folgenden Beispiele dienen zur weiteren Erläuterung der Erfindung. Zur Herstellung der Katalysatoren wurden die im folgenden aufgeführten Materialien verwendet.

Die genaue Zusammensetzung der hergestellten Katalysatoren kann aus Tabelle 1 entnommen werden.

### Oxidische Materialien:

| | |
|---|---|
| TiO₂: | Anatas; BET-Oberfläche >80 m²/g (DT51 von Rhöne Poulenc) |
| TiO₂/WO₃: | mit 10 Gew.-% Wolframoxid stabilisiertes Titanoxid (DT52 von Rhöne Poulenc) |
| Al₂O₃: | γ-Aluminiumoxid; BET-Oberfläche 140 m2/g |
| SiO₂: | pyrogenes Siliciumdioxid (Fa. Degussa-Huels) |
| ZrO₂: | sulfatisiertes Zirkonoxid |
| Al₂O₃/SiO₂: | Aluminiumsilikat mit 5 Gew.-% Siliciumdioxid; BET-Oberfläche >120 m²/g |
| Fe-ZSM5: | 1,1 Gew.-% Fe2O3; Modul = 28 |
| Fe-Mordenit: | 1,5 Gew.-% Fe203; Modul = 30 |

### Vorläuferverbindungen für:

| | |
|---|---|
| WO₃: | Ammoniummetawolframat; |
| V₂O₅: | Vanadyloxalat; Vanadylsulfat, Ammoniummeta-Vanadat |
| Nb₂O₅: | Niob-Ammoniumkomplex (AD 1248 der Firma CBMM) |
| MoO₃: | Ammoniumpolymolybdat; |

### Wabenkörper:

- Typ A:: Wabenkörper aus Cordierit mit 2,54 cm Durchmesser, 7,62 cm Länge, 62 cm⁻² Zelldichte und einer Wandstärke von 0,2 mm.
- Typ B:: Wabenkörper aus Cordierit mit 2,54 cm Durchmesser, 7,62 cm Länge, 140 cm⁻² Zelldichte und einer Wandstärke von 0,08 mm.
- Typ C:: Wabenkörper aus Metallfolien mit 2,54 cm Durchmesser, 7,62 cm Länge, 125 cm⁻² Zelldichte und einer Wandstärke von 0,03 mm.

### Beispiel 1:

Zur Herstellung des erfindungsgemäßen Katalysators K1 wurde eine wäßrige Beschichtungsdispersion mit einem Feststoffanteil von 40 Gew.-% angefertigt. Die Dispersion enthielt, bezogen auf die Trockenmasse, 80 Gew.-% Titandioxid und 20 Gew.-% Aluminiumoxid. Anschließend wurde ein Wabenkörper vom Typ A durch Eintauchen in die Beschichtungsdispersion mit der Oxidmischung beschichtet, danach bei 120° C im Luftstrom getrocknet und bei 500° C an Luft während einer Stunde calciniert. Die auf diese Weise aufgebrachte Beschichtungskonzentration betrug 160 g/l Wabenkörper.

In einem zweiten Schritt wurde der beschichtete Wabenkörper mit 5 g V₂O₅ pro Liter, 26 g WO₃/l und 3 g Nb₂O₅/l belegt. Hierzu wurde der Wabenkörper mit einer Lösung der Vorläuferverbindungen Vanadyloxalat, Ammoniummetawolframat und Niob-Ammoniumkomplex imprägniert. Die Zersetzung der imprägnierten Oxidvorstufen erfolgte nach Lufttrocknung bei 120° C im Luftstrom bei 500° C während einer Stunde. Damit war die Herstellung der Reduktionsschicht abgeschlossen.

In einem weiteren Schritt wurde mittels einer zweiten Beschichtungsdispersion der Wabenkörper nochmals mit einer oxidischen Beschichtung (Hydrolyseschicht) aus TiO₂/WO₃ (80 Gew.-%) und Aluminiumoxid (20 Gew.-%) beschichtet. Die in diesem Schritt aufgebrachte Beschichtungsmenge betrug 60 g/l Tragkörper. Abschließend wurde die Beschichtung während 30 min bei 120° C im Luftstrom getrocknet und für die Dauer von einer Stunde bei 500° C an Luft calciniert.

### Beispiel 2:

Zur Herstellung des erfindungsgemäßen Katalysators K2 wurde zunächst ein Titanoxidpulver nach dem Verfahren der Porenvolumenimprägnierung mit Vanadylsulfat entsprechend einem V₂O₅-Gehalt von 5 Gew.-% imprägniert. Das imprägnierte Material wurde bei 120° C 15 h lang getrocknet und danach für 3 h bei 400° C an Luft calciniert.

Das so erhaltene TiO₂/V₂O₅-Pulver wurde mit Aluminiumoxid zu einer Beschichtungsdispersion (80 Gew.-% TiO₂/V₂O₅ und 20 Gew.-% Al₂O₃) verarbeitet und in einer Konzentration von 160 g/l auf einen Wabenkörper aufgebracht. Die oxidische Beschichtung wurde für 30 min bei 120° C im Luftstrom getrocknet und anschließend für 1 h bei 500° C an Luft calciniert.

Zur Fertigstellung der Reduktionsschicht wurde der beschichtete Wabenkörper mit 26 g WO₃ pro Liter (ex Ammoniummetawolframat) und 3 g Nb₂O₅/l (ex Niob-Ammoniumkomplex) durch Imprägnieren mit löslichen Vorstufen belegt. Die Zersetzung der imprägnierten Oxidvorstufen erfolgte nach Trocknung bei 120° C im Luftstrom für 1 h bei 500° C.

In einem weiteren Schritt wurde die schon in Beispiel 1 beschriebene Hydrolyseschicht aufgebracht.

### Beispiel 3:

Zur Herstellung des erfindungsgemäßen Katalysators K3 wurde TiO₂/WO₃ durch Besprühen mit einer alkalischen (pH = 8 bis 11) Lösung von Ammoniummetavanadat in einem Mischer mit einem V₂O₅-Gehalt von 3,2 Gew.-% imprägniert. Das entstehende feuchte Pulver wurde anschließend für 3 h bei 400° C an Luft calciniert. Anschließend wurde ein wabenförmiger Tragkörper mit der Oxidmischung aus TiO₂/V₂O₅/WO₃ (80 Gew.-%) und Aluminiumoxid (20 Gew.-%) beschichtet (Reduktionsschicht). Die auf diese Weise aufgebrachte Beschichtungsmenge betrug 180 g/l Tragkörper. Die oxidische Beschichtung wurde für 30 Minuten bei 120° C im Luftstrom getrocknet und anschließend für 1 h bei 500° C an Luft calciniert.

In einem weiteren Schritt wurde die in Beispiel 1 beschriebene Hydrolyseschicht aufgebracht.

### Beispiel 4:

Zur Herstellung des erfindungsgemäßen Katalysators K4 wurde zunächst La₂O₃-stabilisiertes Titandioxid (10 Gew.-% La₂O₃) nach dem Verfahren der Porenvolumenimprägnierung mit Vanadyloxalat, entsprechend einem V₂O₅-Gehalt von 3,2 Gew.-%, und mit Ammoniummetawolframat, entsprechend einem WO₃-Gehalt von 10 Gew.-%, imprägniert. Das imprägnierte Material wurde bei 120° C 15 h getrocknet und anschließend für 3 h bei 400° C an Luft calciniert.

Anschließend wurde ein wabenförmiger Tragkörper mit der Oxidmischung aus TiO₂/V₂O₅/WO₃/La₂O₃ (80 Gew.-%) und Aluminiumoxid (20 Gew.-%) beschichtet (Reduktionsschicht). Die aufgebrachte Beschichtungsmenge betrug 180 g/l Tragkörper. Die oxidische Beschichtung wurde für 30 min bei 120° C im Luftstrom getrocknet und anschließend für 1 h bei 500° C an Luft calciniert.

In einem weiteren Schritt wurde die in Beispiel 1 beschriebene Hydrolyseschicht aufgebracht.

### Beispiel 5:

Zur Herstellung des erfindungsgemäßen Katalysators K5 wurde zunächst Titandioxid durch Porenvolumenimprägnierung mit Ammoniumpolymolybdat, entsprechend einem MoO₅-Gehalt von 5,5 Gew.-%, imprägniert. Das imprägnierte Material wurde bei 120° C 15 h getrocknet und anschließend für 4 h bei 480° C an Luft calciniert.

Anschließend wurde ein wabenförmiger Tragkörper mit der Oxidmischung aus TiO₂/MoO₃ (80 Gew.-%) und Aluminiumoxid (20 Gew.-%) beschichtet (Reduktionsschicht). Die aufgebrachte Beschichtungsmenge betrug 180 g/l Tragkörper. Die oxidische Beschichtung wurde für 30 min bei 120° C im Luftstrom getrocknet und anschließend für 4 h bei 300° C an Luft calciniert.

In einem zweiten Schritt wurde anschließend der beschichtete Tragkörper mit 5 g V₂O₅ (ex Vanadyloxalat) und 3 g Nb₂O₅ (ex Niob-Ammoniumkomplex) pro Liter Tragkörper imprägniert. Die Zersetzung der imprägnierten Oxidvorstufen erfolgte nach Lufttrocknung bei 120° C im Luftstrom für 2 h bei 500° C.

In einem weiteren Schritt wurde die in Beispiel 1 beschriebene Hydrolyseschicht aufgebracht.

### Beispiel 6

Es wurde ein weiterer Katalysator nach Beispiel 3 hergestellt (Katalysator K6). Die Beschichtungsmengen der Reduktionsschicht und der Hydrolyseschicht wurden jedoch jeweils auf 120 g/l Tragkörper eingestellt.

### Beispiel 7

Es wurde ein Tragkörper mit der Reduktionsschicht von Beispiel 3 versehen. Auf diese Schicht wurde eine Hydrolyseschicht aus Titandioxid (80 Gew.-%) und Aluminiumoxid (20 Gew.-%) aufgebracht (Katalysator K7). Die in diesem Schritt aufgebrachte Beschichtungsmenge betrug 60 g/l. Abschließend wurde die Beschichtung für 30 min bei 120° C im Luftstrom getrocknet und für 1 h bei 500° C an Luft calciniert.

### Beispiel 8

Es wurde ein Tragkörper mit der Reduktionsschicht von Beispiel 3 versehen. Auf diese Schicht wurde eine Hydrolyseschicht aus Aluminiumsilikat aufgebracht (Katalysator K8). Die Beschichtungsmenge betrug 60 g/l Tragkörper. Abschließend wurde die Beschichtung für 30 min bei 120° C im Luftstrom getrocknet und für 2 h bei 300° C an Luft calciniert.

### Beispiel 9

Es wurde ein Tragkörper mit der Reduktionsschicht von Beispiel 3 versehen. Auf diese Schicht wurde eine Hydrolyseschicht aus Aluminiumsilikat und TiO₂/WO₃ im Gewichtsverhältnis von 1:1 aufgebracht. Die Beschichtungsmenge der Hydrolyseschicht betrug 60 g/l Tragkörper. Abschließend wurde die Beschichtung für 30 min bei 120° C im Luftstrom getrocknet und für 2h bei 300° C an Luft calciniert.

### Beispiel 10

Es wurde ein Tragkörper mit der Reduktionsschicht von Beispiel 3 versehen. Auf diese Schicht wurde eine Hydrolyseschicht aus sulfatisiertem Zirkonoxid (80 Gew.-%) und Aluminiumoxid (20 Gew.-%) aufgebracht. Die Beschichtungsmenge betrug 60 g/l Tragkörper. Abschließend wurde die Beschichtung für 30 min bei 120° C im Luftstrom getrocknet und für 2 h bei 500° C an Luft calciniert.

### Beispiel 11

Es wurde ein Tragkörper mit der Reduktionsschicht von Beispiel 3 versehen. Auf diese Schicht wurde eine Hydrolyseschicht aus hochoberflächigem Siliciumdioxid (Aerosil®; 80 Gew.-%) und Aluminiumoxid (20 Gew.-%) aufgebracht. Die Beschichtungsmenge betrug 60 g/l Tragkörper. Abschließend wurde die Beschichtung für 30 min bei 120° C im Luftstrom getrocknet und für 2 h bei 500° C an Luft calciniert.

### Beispiel 12

Es wurde ein weiterer Katalysator nach Beispiel 3 hergestellt. Als Tragkörper wurde ein keramischer Wabenkörper vom Typ B verwendet.

### Beispiel 13

Es wurde ein weiterer Katalysator nach Beispiel 3 hergestellt. Als Tragkörper wurde ein metallischer Wabenkörper vom Typ C verwendet.

### Beispiel 14

Es wurde ein weiterer Katalysator nach Beispiel 3 hergestellt. Die Hydrolyseschicht wurde jedoch von der Eintrittsstirnfläche des Wabenkörpers ausgehend nur auf 50 % der Länge des Tragkörpers aufgetragen.

### Beispiel 15

Es wurde ein weiterer Katalysator nach Beispiel 1 angefertigt. Nach Calcinierung der Hydrolyseschicht wurde der Katalysator in einem weiteren Schritt von der Austrittsstirnfläche ausgehend nur auf 50% der Länge des Wabenkörpers mit 0,5 g V₂O₅ (ex Vanadyloxalat) pro Liter Tragkörper belegt. Die Zersetzung der imprägnierten Oxidvorstufen erfolgte nach Trocknung bei 120° C im Luftstrom für 1 h bei 500° C.

### Beispiel 16

Ein wurde ein weiterer Katalysator nach Beispiel 3 hergestellt. Die Reduktionsschicht wurde jedoch zusätzlich von der Austrittsstirnfläche auf 50% der Länge des Wabenkörpers in einem weiteren Schritt mit 2 g V₂O₅/l Tragkörper (ex Vanadyloxalat) nachimprägniert. Die Hydrolyseschicht wurde von der Eintrittsstirnfläche aus nur auf 50 % der Länge des Wabenkörpers aufgebracht. Die Zersetzung der imprägnierten Oxidvorstufen erfolgte nach Trocknung bei 120° C im Luftstrom für 1 h bei 500° C.

### Beispiel 17

Für den erfindungsgemäßen Katalysator K17 wurde ein TiO₂/WO₃/V₂O₅-Vollextrudat mit einer Zelldichte von 31 Zellen pro cm² und einer Wandstärke von 0,35 mm mit einer Beschichtung aus TiO₂/WO₃ (80 Gew.-%) und Aluminiumoxid (20 Gew.-%) beschichtet (Hydrolyseschicht). Die in diesem Schritt aufgebrachte Beschichtungsmenge betrug 60 g/l Tragkörper. Abschließend wurde die Beschichtung für 30 min bei 120° C im Luftstrom getrocknet und für 2h bei 500° C an Luft calciniert.

### Beispiel 18

Zur Herstellung eines erfindungsgemäßen Katalysators K18 wurde eine wäßrige Beschichtungsdispersion mit einem Feststoffanteil von 40 Gew.-% angefertigt. Die Dispersion enthielt, bezogen auf die Trockenmasse, 80 Gew.-% Fe-ZSM-5 (Modul 28, 1,1 Gew.-% Fe₂O₃) und 20 Gew.-% Aluminiumoxid. Anschließend wurde ein Wabenkörper vom Typ A durch Eintauchen in die Beschichtungsdispersion mit der Oxidmischung beschichtet und danach bei 120° C im Luftstrom getrocknet. Anschließend erfolgte eine 4-stündigen Calcinierung bei 300° C an Luft. Die auf diese Weise aufgebrachte Beschichtungsmenge (Reduktionsschicht) betrug 180 g/l Tragkörper.

In einem weiteren Schritt wurde der Tragkörper mit der Hydrolyseschicht gemäß Beispiel 1 belegt. Die in diesem Schritt aufgebrachte Beschichtungsmenge betrug 60g/l Tragkörper.

### Beispiel 19

Zur Herstellung des erfindungsgemäßen Katalysators K19 wurde eine wäßrige Beschichtungsdispersion mit einem Feststoffanteil von 40 Gew.-% angefertigt. Die Dispersion enthielt, bezogen auf die Trockenmasse, 80 Gew.-% Fe-Mordenit (Modul 30, 1,5 Gew.-% Fe₂O₃) und 20 Gew.-% Aluminiumoxid. Anschließend wurde ein Wabenkörper durch Eintauchen in die Beschichtungsdispersion mit der Oxidmischung beschichtet und bei 120° C im Luftstrom getrocknet. Danach erfolgte eine 4-stündigen Calcinierung bei 300° C an Luft. Die auf diese Weise aufgebrachte Beschichtungsmenge (Reduktionsschicht) betrug 140 g/l Tragkörper.

In einem weiteren Schritt wurde der beschichtete Tragkörper nochmals mit einer oxidischen Beschichtung aus Aluminiumsilikat (Hydrolyseschicht) versehen. Die in diesem Schritt aufgebrachte Beschichtungsmenge betrug 80 g/l Tragkörper. Abschließend wurde die Beschichtung für 30 min bei 120° C im Luftstrom getrocknet und für 2h bei 300° C an Luft calciniert.

### Beispiel 20:

Es wurde ein weiterer Katalysator nach Beispiel 1 hergestellt. Nach Calcinierung der Reduktionsschicht wurde die Stirnseite des Katalysatorkörpers in einem weiteren Schritt mit einer oxidischen Beschichtung (Hydrolyseschicht) aus TiO₂/WO₃ (80 Gew.-%) und Aluminiumoxid (20 Gew.-%) beschichtet. Die Beschichtungsdispersion wurde mittels einer Farbspritzpistole gleichmäßig über die gesamte Eintrittsstirnfläche aufgesprüht. Die in diesem Schritt aufgebrachte Beschichtungsmenge betrug 40 g/l Tragkörper, bezogen auf das besprühte Volumenelement. Abschließend wurde die Beschichtung während 30 min bei 120° C im Luftstrom getrocknet und für die Dauer von einer Stunde bei 500° C an Luft calciniert.

### Beispiel 21:

Es wurde ein weiterer Katalysator nach Beispiel 22 hergestellt. Nach Trocknung der Hydrolyseschicht wurde die Stirnseite des Katalysators in einem weiteren Schritt erneut mit der Beschichtungsdispersion für die Hydrolyseschicht besprüht. Mittels einer Schablone wurde allerdings nur ein zentraler Bereich der Eintrittsstirnfläche beschichtet (ca. 50% der Gesamtfläche). Die in diesem Schritt aufgebrachte Beschichtungsmenge betrug 20 g/l Tragkörper, bezogen auf das besprühte Volumenelement. Abschließend wurde die Beschichtung während 30 min bei 120° C im Luftstrom getrocknet und für die Dauer von einer Stunde bei 500° C an Luft calciniert.

### Beispiel 22:

Es wurde ein weiterer Katalysator nach Beispiel 1 hergestellt. Nach Calcinierung der Reduktionsschicht wurde die Stirnseite des Katalysatorkörpers in einem weiteren Schritt nochmals mit einer oxidischen Beschichtung (Hydrolyseschicht) aus TiO₂/WO₃ (80 Gew.-%) und Aluminiumoxid (20 Gew.-%) beschichtet. Die zusätzliche Beschichtung wurde durch kurzzeitiges Eintauchen des Katalysatorkörpers in die Beschichtungsdispersion und anschließendes Ausblasen von der Austrittsstirnfläche aufgebracht. Die Eintauchtiefe betrug nur 10 Millimeter. Die in diesem Schritt aufgebrachte Beschichtungsmenge betrug 30 g/l Tragkörper, bezogen auf das beschichtete Volumenelement. Abschließend wurde die Beschichtung während 30 min bei 120° C im Luftstrom getrocknet und für die Dauer von einer Stunde bei 500° C an Luft calciniert.

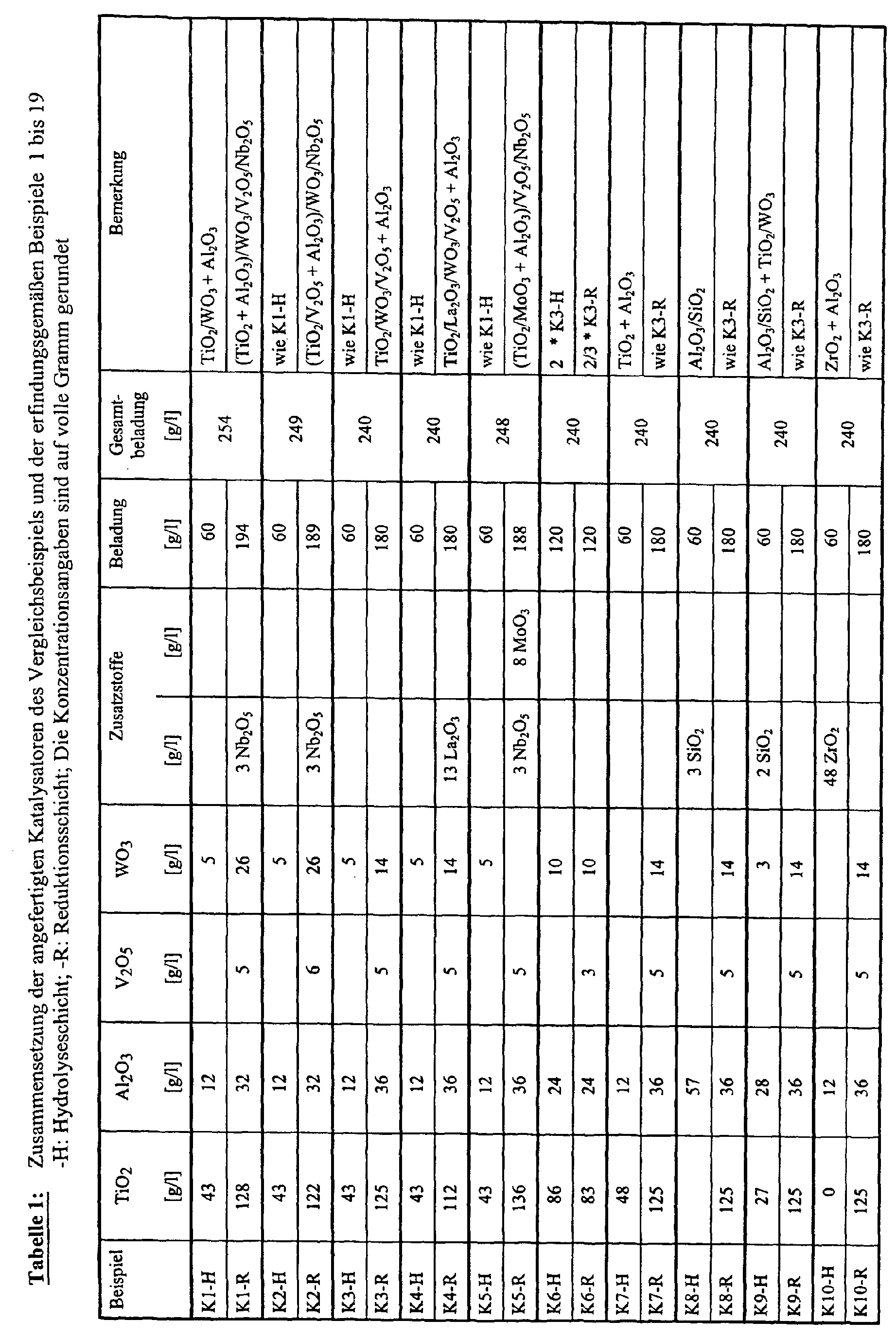

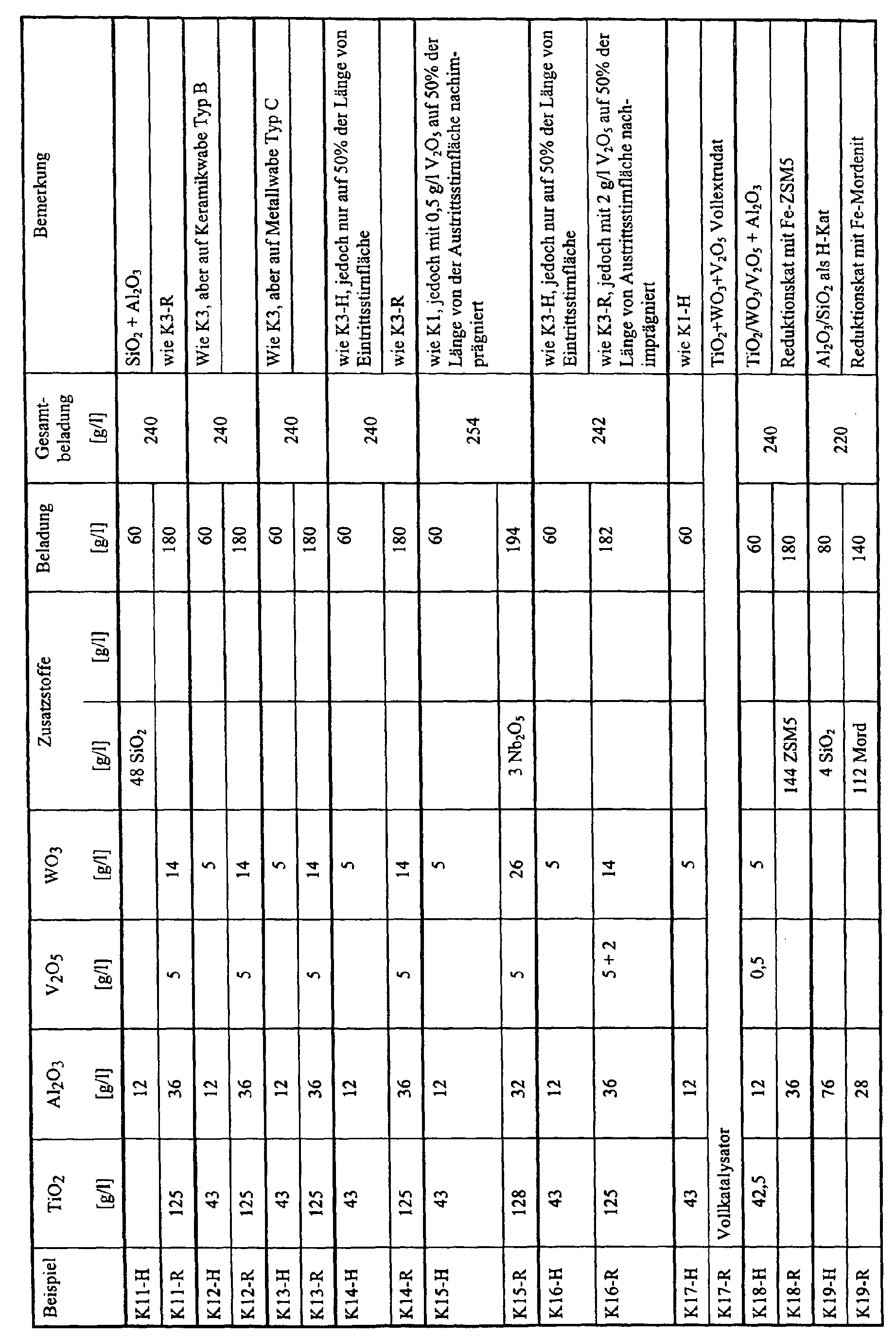

## Patentansprüche

1. Strukturierter Katalysator für die selektive Reduktion von im mageren Abgasstrom eines Verbrennungsmotors enthaltenen Stickoxiden mittels Ammoniak unter Verwendung einer zu Ammoniak hydrolysierbaren Verbindung, welche in Form eines Aerosols in den Abgasstrom eingedüst wird, wobei der strukturierte Katalysator in Form eines monolithischen Katalysatorkörpers vorliegt, der von einer Eintrittsstirnfläche zu einer Austrittsstirnfläche von einer Vielzahl von Strömungspfaden für das Abgas durchzogen ist, wobei
der Katalysator einen Reduktionskatalysator für die selektive Reduktion von Stickoxiden mittels Ammoniak und einen Hydrolysekatalysator für die Hydrolyse der zu Ammoniak hydrolysierbaren Verbindung enthält, **dadurch gekennzeichnet, dass** der Hydrolysekatalysator in Form einer Beschichtung auf dem Reduktionskatalysator aufgebracht ist.

2. Katalysator nach Anspruch 1,
**dadurch gekennzeichnet,**
**dass** es sich bei dem Reduktionskatalysator um einen extrudierten Vollkatalysator in Wabenform handelt, wobei die Strömungspfade durch regelmäßig über den Querschnitt des Katalysatorkörpers angeordnete parallele, durch Kanalwände begrenzte Strömungskanäle gebildet werden und die Beschichtung des Hydrolysekatalysators auf den Kanalwänden aufgebracht ist.

3. Katalysator nach Anspruch 2,
**dadurch gekennzeichnet,**
**dass** der Hydrolysekatalysator von der Eintrittsstirnfläche ausgehend nur auf 10 bis 70% der Länge des Wabenkörpers auf die Kanalwände der Strömungskanäle aufgebracht ist.

4. Katalysator nach Anspruch 1,
**dadurch gekennzeichnet,**
**dass** Reduktionskatalysator und Hydrolysekatalysator in Form übereinanderliegender Beschichtungen auf einem inerten Wabenkörper aufgebracht sind, wobei die Strömungspfade durch regelmäßig über den Querschnitt des Wabenkörpers angeordnete parallele, durch Kanalwände begrenzte Strömungskanäle gebildet werden und der Reduktionskatalysator die erste auf den Kanalwänden der Strömungskanäle liegende Schicht bildet und der Hydrolysekatalysator als zweite Schicht auf dem Reduktionskatalysator liegt.

5. Katalysator nach Anspruch 4,
**dadurch gekennzeichnet,**
**dass** der Hydrolysekatalysator von der Eintrittsstirnfläche ausgehend nur auf 10 bis 70% der Länge des Wabenkörpers auf die Kanalwände der Strömungskanäle aufgebracht ist.

6. Katalysator nach einem der vorstehenden Ansprüche,
**dadurch gekennzeichnet,**
**dass** der Reduktionskatalysator die folgenden Komponenten enthält:
D) Titanoxid,
E) mindestens ein Oxid von Wolfram, Niob, Molybdän, Silicium, Bor, Aluminium, Phosphor, Zirkon, Barium, Yttrium, Lanthan und Cer und Mischoxide hiervon und mit Titanoxid und
F) mindestens ein Oxid von Vanadium, Eisen und Kupfer.

7. Katalysator nach Anspruch 6,
**dadurch gekennzeichnet,**
**dass** das Titanoxid zu 30 bis 100 Gew.-% in der Anatasmodifikation mit einer spezifischen Oberfläche von mehr als 40 m²/g vorliegt.

8. Katalysator nach Anspruch 7,
**dadurch gekennzeichnet,**
**dass** das Titanoxid mit 1 bis 20 Gew.-% Wolframoxid, Molybdänoxid, Siliciumoxid oder Lanthanoxid stabilisiert ist.

9. Katalysator nach Anspruch 8,
**dadurch gekennzeichnet,**
**dass** der Reduktionskatalysator auf einer Länge von 10 bis 90% von der Austrittsstirnfläche des Wabenkörpers zusätzlich mit Vanadiumoxid belegt ist.

10. Katalysator nach einem der Ansprüche 1 bis 5,
**dadurch gekennzeichnet,**
**dass** der Reduktionskatalysator einen oder mehrere Zeolithe enthält, welche mit Kupfer und/oder Eisen sowie gegebenenfalls noch mit Cer oder Molybdän beladen sind.

11. Katalysator nach einem der Ansprüche 1 bis 5,
**dadurch gekennzeichnet,**
**dass** der Reduktionskatalysator aus einer Mischung der Reduktionskatalysatoren der Ansprüche 6 und 10 besteht.

12. Katalysator nach einem der Ansprüche 6, 10 oder 11,
**dadurch gekennzeichnet,**
**dass** der Hydrolysekatalysator Titandioxid, Aluminiumoxid, Siliciumdioxid, Zirkondioxid oder deren Mischphasen und Verbindungen untereinander enthält.

13. Katalysator nach Anspruch 12,
**dadurch gekennzeichnet,**
**dass** der Hydrolysekatalysator zusätzlich wenigstens ein Oxid aus der Gruppe SO₃, WO₃, Nb₂O₅ und MbO₃ enthält.

14. Katalysator nach Anspruch 12,
**dadurch gekennzeichnet,**
**dass** die Beschichtungskonzentration des Hydrolysekatalysators von der Eintrittsstirnfläche längs des Katalysatorkörpers kontinuierlich bis auf Null abfällt.

15. Katalysator nach Anspruch 11,
**dadurch gekennzeichnet,**
**dass** nur 10-90% der Eintrittsstirnfläche mit dem Hydrolysekatalysator beschichtet sind.

16. Katalysator nach Anspruch 11,
**dadurch gekennzeichnet,**
**dass** nur ausgewählte Bereiche der Eintrittsstirnfläche mit dem Hydrolysekatalysator beschichtet sind.

17. Katalysator nach Anspruch 11,
**dadurch gekennzeichnet,**
**dass** die Eintrittsstirnfläche des Katalysatorkörpers entsprechend der Verteilung des Aerosols der zu Ammoniak hydrolysierbaren Verbindung über den Querschnitt des Abgasstromes mit dem Hydrolysekatalysator beschichtet ist.

## Claims

1. A structured catalyst for selective reduction of nitrogen oxides contained in the lean exhaust gas stream of a combustion engine by means of ammonia using a compound that can be hydrolyzed to ammonia, which is injected into the exhaust gas stream in form of an aerosol, wherein said structured catalyst is present in form of a monolithic catalyst body having a plurality of flow paths for the exhaust gas from an inlet face to an outlet face, wherein
said catalyst comprises a reduction catalyst for selective reduction of nitrogen oxides by means of ammonia and a hydrolysis catalyst for hydrolysis of the compound that can be hydrolyzed to ammonia **characterized in that** the hydrolysis catalyst is applied in form of a coating on the reduction catalyst.

2. The catalyst according to claim 1,
**characterized in that**,
the reduction catalyst is an extruded complete catalyst in honeycomb form, wherein the flow paths are formed by parallel flow channels regularly arranged over the cross section of the catalyst body and bounded by channel walls and the coating of the hydrolysis catalyst is applied to the channel walls.

3. The catalyst according to claim 2,
**characterized in that**,
the hydrolysis catalyst is applied to the channel walls of the flow channels only over 10 to 70% of the length of the honeycomb body starting from said inlet face.

4. The catalyst according to claim 1,
**characterized in that**,
the reduction catalyst and hydrolysis catalyst are applied in form of superimposed coatings onto an inert honeycomb body, wherein the flow paths are formed by parallel flow channels regularly arranged over the cross section of the honeycomb body and bounded by channel walls and the reduction catalyst forms the first layer lying on the channel walls of the flow channels and the hydrolysis catalyst lies on the reduction catalyst as the second layer.

5. The catalyst according to claim 4,
**characterized in that**,
the hydrolysis catalyst is applied to the channel walls of the flow channels only over 10 to 70% of the length of the honeycomb body starting from said inlet face.

6. The catalyst according to any one of the preceding claims,
**characterized in that**,
the reduction catalyst comprises the following components
D) titanium oxide
E) at least one oxide selected from tungsten, niobium, molybdenum, silicon, boron, aluminum, zirconium, barium, yttrium, lanthanum and cerium and mixed oxides thereof and with titanium oxide and
F) at least one oxide of vanadium, iron and copper.

7. The catalyst according to claim 6,
**characterized in that**,
the titanium oxide is present up to 30 to 100 wt% in the anatase modification with a specific surface greater than 40m²/g.

8. The catalyst according to claim 7,
**characterized in that**,
the titanium oxide is stabilized with 1 to 20 wt% tungsten oxide, molybdenum oxide, silicon oxide or lanthanum oxide.

9. The catalyst according to claim 8,
**characterized in that**
the reduction catalyst is additionally coated with vanadium oxide over a length of 10 to 90% from the outlet face of the honeycomb body.

10. The catalyst according to any one of claims 1 to 5,
**characterized in that**
the reduction catalyst comprises one or more zeolites, which are charged with copper and/or iron and optionally also with cerium or molybdenum.

11. The catalyst according to any one of claims 1 to 5,
**characterized in that**,
the reduction catalyst consists of a mixture of the reduction catalysts according to claims 6 and 10.

12. The catalyst according to any one of claims 6, 10 or 11,
**characterized in that**,
the hydrolysis catalyst comprises titanium dioxide, aluminum oxide, silicon dioxide, zirconium dioxide or their mixed phases and compounds with each other.

13. The catalyst according to claim 12,
**characterized in that**,
the hydrolysis catalyst additionally comprises at least one oxide selected from the group consisting of SO₃, WO₃, Nb₂O₅ and MbO₃.

14. The catalyst according to claim 12,
**characterized in that**,
the coating concentration of the hydrolysis catalyst decreases continuously from the inlet face along the length of the catalyst body up to 0.

15. The catalyst according to claim 11,
**characterized in that**,
only 10-90% of the inlet face is coated with the hydrolysis catalyst.

16. The catalyst according to claim 11,
**characterized in that**,
only selected regions of the inlet face are coated with the hydrolysis catalyst.

17. The catalyst according to claim 11,
**characterized in that**,
the inlet face of the catalyst body is coated with the hydrolysis catalyst corresponding to the distribution of the aerosol of the compound that can be hydrolyzed to ammonia, over the cross section of the exhaust gas stream.

## Revendications

1. Catalyseur structuré pour la réduction sélective d'oxydes d'azote contenus dans le courant de gaz d'échappement d'un moteur à combustion au moyen d'ammoniac en utilisant un composé hydrolysable en ammoniac qui est injecté, sous la forme d'un aérosol, dans le courant de gaz d'échappement, le catalyseur structuré se présentant sous la forme d'un corps de catalyseur monolithique qui est traversé par un grand nombre de chemins d'écoulement du gaz d'échappement, depuis une face frontale d'entrée vers une face frontale de sortie, le catalyseur renfermant un catalyseur de réduction pour la réduction sélective d'oxydes d'azote au moyen d'ammoniac et un catalyseur d'hydrolyse pour l'hydrolyse du composé hydrolysable en ammoniac,
**caractérisé en ce que**
le catalyseur d'hydrolyse est appliqué sous forme de revêtement sur le catalyseur de réduction.

2. Catalyseur selon la revendication 1,
**caractérisé en ce que**
le catalyseur de réduction est un catalyseur plein extrudé de forme alvéolaire, les chemins d'écoulement étant formés par des canaux d'écoulement parallèles disposés régulièrement sur la section transversale du corps de catalyseur et limités par des parois de canal et le revêtement du catalyseur d'hydrolyse étant appliqué sur les parois de canal.

3. Catalyseur selon la revendication 2,
**caractérisé en ce que**
le catalyseur d'hydrolyse n'est appliqué, en partant de la face frontale d'entrée, que sur 10 à 70 % de la longueur du corps alvéolaire sur les parois de canal des canaux d'écoulement.

4. Catalyseur selon la revendication 1,
**caractérisé en ce que**
le catalyseur de réduction et le catalyseur d'hydrolyse sont appliqués sous forme de revêtements superposés sur un corps alvéolaire inerte, les chemins d'écoulement étant formés par des canaux d'écoulement parallèles disposés régulièrement sur la section transversale du corps alvéolaire et limités par des parois de canal et le catalyseur de réduction constituant la première couche située sur les parois de canal des canaux d'écoulement et le catalyseur d'hydrolyse se trouvant, en tant que deuxième couche, sur le catalyseur de réduction.

5. Catalyseur selon la revendication 4,
**caractérisé en ce que**
le catalyseur d'hydrolyse n'est appliqué, en partant de la face frontale d'entrée, que sur 10 à 70 % de la longueur du corps alvéolaire sur les parois de canal des canaux d'écoulement.

6. Catalyseur selon l'une quelconque des revendications précédentes,
**caractérisé en ce que**
le catalyseur de réduction comporte les composants suivants :
D) oxyde de titane,
E) au moins un oxyde de tungstène, de niobium, de molybdène, de silicium, de bore, d'aluminium, de phosphore, de zirconium, de baryum, d'yttrium, de lanthane et de cérium et des oxydes mixtes de ceux-ci et avec de l'oxyde de titane et
F) au moins un oxyde de vanadium, de fer et de cuivre.

7. Catalyseur selon la revendication 6,
**caractérisé en ce que**
l'oxyde de titane est présent à raison de 30 à 100 % en poids dans la modification de l'anatase avec une surface spécifique de plus de 40 m²/g.

8. Catalyseur selon la revendication 7,
**caractérisé en ce que**
l'oxyde de titane est stabilisé avec 1 à 20 % en poids d'oxyde de tungstène, d'oxyde de molybdène, d'oxyde de silicium ou d'oxyde de lanthane.

9. Catalyseur selon la revendication 8,
**caractérisé en ce que**
le catalyseur de réduction est doté en plus d'oxyde de vanadium sur une longueur de 10 à 90 % de la face frontale de sortie du corps alvéolaire.

10. Catalyseur selon l'une quelconque des revendications 1 à 5,
**caractérisé en ce que**
le catalyseur de réduction contient une ou plusieurs zéolithes qui sont chargées de cuivre et/ou de fer ainsi que, le cas échéant, de cérium ou de molybdène.

11. Catalyseur selon l'une quelconque des revendications 1 à 5,
**caractérisé en ce que**
le catalyseur de réduction est constitué d'un mélange de catalyseurs de réduction des revendications 6 et 10.

12. Catalyseur selon l'une quelconque des revendications 6, 10 et 11,
**caractérisé en ce que**
le catalyseur d'hydrolyse contient du dioxyde de titane, de l'oxyde d'aluminium, du dioxyde de silicium, du dioxyde de zirconium ou leurs phases mixtes et des composés constitués entre eux.

13. Catalyseur selon la revendication 12,
**caractérisé en ce que**
le catalyseur d'hydrolyse contient en plus au moins un oxyde du groupe SO₃, WO₃, Nb₂O₅ et MbO₃.

14. Catalyseur selon la revendication 12,
**caractérisé en ce que**
la concentration de revêtement du catalyseur d'hydrolyse de la face frontale d'entrée le long du corps du catalyseur chute en continu jusqu'à zéro.

15. Catalyseur selon la revendication 11,
**caractérisé en ce que**
seulement 10 à 90 % de la face frontale d'entrée sont recouverts de catalyseur d'hydrolyse.

16. Catalyseur selon la revendication 11,
**caractérisé en ce que**
seules les zones de la face frontale d'entrée sélectionnées sont recouvertes de catalyseur d'hydrolyse.

17. Catalyseur selon la revendication 11,
**caractérisé en ce que**
la face frontale d'entrée du corps de catalyseur est recouverte de catalyseur d'hydrolyse conformément à la répartition de l'aérosol du composé hydrolysable en ammoniac sur la section transversale du courant de gaz d'échappement.
